# EUROPEAN PATENT APPLICATION

(11) **EP 0 970 776 A1**
(43) Date of publication of application: **12.01.2000**
(21) Application number: 99202222.8
(22) Date of filing: 07.07.1999
(51) Int. Cl.: B23K 35/34, B23K 35/02, B23K 1/00

(54) **Method for reactively joining materials**

(30) Priority: 08.07.1998 NL 1009594
(71) Applicant: Technische Universiteit Delft, 2628 BL Delft (NL)
(72) Inventor: Brinkman, Hendrik Johan, 2611 KM Delft (NL); Duszczyk, Jerry, 2614 WX Delft (NL); Katgerman, Laurens, 2642 CT Pijnacker (NL)
(74) Representative: Ottevangers, Sietse Ulbe

(57) **Abstract**

Method for reactively joining materials in solid form, such as intermetallic compounds and technical ceramics, wherein: a) a mixed powder is provided in solid form between the materials to be joined; b) at least the powder mixture is locally heated, causing exothermic reactions to take place, whereby the heat is released at the contact surfaces of the materials to be joined, where it causes a local melting; and c) subsequently cools down.

At least one of the materials to be joined has a melting point coinciding with the melting point of the lowest-melting component in the powder mixture; and the exothermic process is initiated at a temperature before the melting point of one of the materials to be joined is reached. Before the exothermic process is initiated, a component is added to the powder mixture, forming a liquid eutectic phase with the material having the lowest melting point of the materials to be joined, with the liquid eutectic phase acting as vehicle for the reactants in the powder mixture.

## Description

The invention relates to a method for reactively joining materials in solid form, such as intermetallic compounds and technical ceramics, wherein: a) a mixed powder is provided in solid form between the materials to be joined; b) at least the powder mixture is locally heated, causing exothermic reactions to take place in the powder mixture, whereby the heat is released at the contact surfaces of the materials to be joined, where it causes a local melting; and c) subsequently cools down.

The exothermic reactions result from chemical reactions between the mixed powders.

Such exothermic powder-metallurgical joining process is known to persons skilled in the art (see for instance the article "Joining by SHS"; R.W. Messler, and T.T. Orling, Advances in Powder Metallurgy and Particulate Materials - 1994; Vol. 6; 273-285 (Proceedings of the 1994 International Conference & Exhibition on Powder Metallurgy & Particulate Materials, May 8-11, Toronto Canada)), and is for instance used for joining materials such as Inconel-Inconel (Inconel is an Ni superalloy). As exothermic chemical reaction, the following reaction is used for this:

3 Ni + Al = Ni₃Al + Q (1)

wherein Q represents the heat released.

However, the known method has a number of drawbacks: the joining process is limited to the use of powder mixtures that react to form an intermetallic compound, for instance Ni₃Al, or a ceramics, for instance TiC. Characteristically, the melting point of the materials to be joined is much higher than the initiation temperature of the exothermic process. Initiation of the exothermic reactions is effected through the formation of a liquid phase in the powder mixture upon local heating. A liquid phase is usually formed by the melting of the component having the lowest melting point in the powder mixture. In reaction (1) this is Al. Hence, in this form, the known process is only suitable for joining materials having a melting point higher than the melting point of the lowest-melting phase present in the powder mixture. An example hereof is aluminum and metal matrix composites (MMCs) with an aluminum matrix.

MMCs are advanced materials which, due to their controlled composition, have "tailor-made" properties in respect of, for instance, strength, wear, etc., that cannot be achieved by the metal matrices (aluminum, copper, etc.) without the addition of reinforcing particles. Because of the high production costs of MMCs, it is financially wise to use them in constructions only economically, i.e. only where the matrix material is not sufficient. The unsuitability of conventional welding processes for these compounds is one of the reasons why MMCs are not used very much as yet. It is to be expected that with an adequate joining technique, MMC-Al and MMC-MMC compounds could be used in many constructions.

Problems that arise during the joining of aluminum and aluminum (MMCs) are:
- The strong oxide skin of aluminum that has to be broken through first in order to obtain a proper joint.
- The great thermal conduction coefficient of Al.
- The influence of the heat input during the welding process on the structure and, accordingly, on the (mechanical) properties of the material on the weld.

Aluminum MMCs involve additional problems:
- MMC: the reactions between matrix and reinforcing phase at temperatures above the melting point of Al.
- High viscosity of MMCs.
- The bond between MMC and Al is discontinuous.
- Stresses may occur at the location of the weld.

The present invention overcomes these drawbacks and to that end, the method according to the invention is characterized in that at least one of the materials to be joined has a melting point coinciding with the melting point of the lowest-melting component in the powder mixture; that the exothermic process is initiated at a temperature before the melting point of one of the materials to be joined is reached, and that before the exothermic process is initiated, a component is added to the powder mixture, forming a liquid eutectic phase with the material having the lowest melting point of the materials to be joined, with the liquid eutectic phase acting as vehicle for the reactants in the powder mixture.

In this manner, the exothermic process is initiated below the melting temperature of the lowest-melting phase in the powder mixture and, accordingly, below the melting point of the materials to be joined.

According to the method of the invention, due to a short liquid phase, a proper bond is formed between the materials to be joined, and the time in which possibly disadvantageous influences and processes may take place is limited.

It is observed that the addition of reinforcing particles to intermetallic compounds in inert form is known per se. However, these known additions do not participate in the reaction. An example hereof is:

3Ni + Al + TiC = Ni₃Al + TiC + Q

Apart from influencing the mechanical properties of the weld, such addition is also used for reducing/tempering the amount of heat released (per weight). The use of a "gradient weld", i.e. a gradual transition in composition in the powder mixture, is also known per se and is in particular suitable for joining materials having dissimilar physical properties (such as thermal expansion coefficient) and different mechanical properties.

Hereinafter, the invention will be specified on the basis of an example and the description.

In accordance with the present invention, the exothermic joining process is used for joining materials, wherein only one of the materials to be joined has a melting point which coincides with the melting point of the lowest-melting component in the powder mixture. A model system is the joining of an (aluminum) MMC-MMC or MMC-(aluminum) alloy with a powder mixture, reacting to form a metal matrix composite (MMC). An example is:

Al + y(Ti+2B) = Al - yTiB₂ + Q (2)

Reaction (2) (and similar reactions) is known per se for manufacturing MMCs, but has never been used for the exothermic joining of Al-MMC (and MMC-MMC) (see for instance "Materials for advanced studies and devices", A.R.C. Westwood; Metallurgical Transactions A; Vol. 19A; 1988, pp. 749-758), because reaction (2) and similar reactions in the above form are not suitable for such purpose.

The essence of the invention is that reaction (2) and similar reactions are now rendered suitable for joining materials such as aluminum and MMCs and the like. This is achieved by initiating the exothermic process at a temperature lower than the melting temperature of the materials to be joined.

This earlier initiation of the exothermic process below the melting point of the lowest-melting component in the powder mixture, and below the melting point of the materials to be joined, is achieved through the formation of a liquid phase in at least a part of the powder mixture. This liquid phase is in turn the result of the addition of a component to the powder mixture forming a eutectic phase with the lowest-melting component in the powder mixture. This decrease of the temperature at which a local liquid phase is formed in the powder mixture has as a result that the initiation temperature of the exothermic reactions comes to lie below the melting point of the lowest-melting component in the powder mixture, and below the melting point of the materials to be joined. An example hereof is:

Al + Cu + y(Ti+2B) = (Al-Cu) - yTiB₂ + Q (3)

The Al-Cu eutectic lies at 548°C. This liquid eutectic phase acts as vehicle for the reactants in the powder mixture. It is sufficient when, through the addition of a component like Cu, a liquid phase is formed locally, because although this involves local initiation of the exothermic process, the heat that is locally released provides that the reaction is initiated in the entire mixture.

The advantages of the invention are:
- The heat required for the joint is generated on the weld. Consequently, the heat influence on the structure of the material at the location of the weld is minimal.
- The temperature gradient of the process is very great, so that the great thermal conduction of Al is no problem.
- The heat input is of a very short duration, so that undesired processes in the material to be joined remain limited.
- It is known how much heat is released during the formation reaction. This enables the heat input to be minimized. Optionally, other formation reactions can be used as well (for instance Ti + C=TiC).
- The temporary liquid phase provides a proper joint and breaking up of the oxide skins.
- An advantage for joining Al MMC is also that the temporarily high temperature prevents the problems of the low viscosity of Al MMC around the melting point (poor mixture).
- The weld itself is also a composite material and hence not mechanically weaker than the MMCs to be joined.
- For joining a composite to an alloy, a gradual transition can be made by utilizing several stacked starting layers.
- The composition of the matrix is free, enabling different alloy elements to be added for approaching the composition of the material to be joined as much as possible.
- This joining method can be used in such a manner that the pouring structure of the heat-influenced zone in the parent material is refined. 'Heat-influenced zone' is understood to mean that portion of the material which has a different structure due to the welding process.

It is observed that the use of a eutectic liquid phase is known per se from the so-called "Transient Liquid Phase Bonding" TLPB process (see for instance "Eutectic bonding of Boron-Aluminum structural components"; J.T. Niemann and R.A. Garret; Welding Journal Research Supplement; April 1974, pp. 175-184). In this process, a Cu foil is placed between two Al alloys and next, the whole is brought to a temperature above the eutectic temperature, but below the melting point of Al. As a result, a liquid phase is formed on the interfaces of Al-Cu, which, after cooling, leads to a joint.

The difference between the invention and TLPB is that in the TLPB process, no exothermic reaction is used beside the Al-Cu eutectic. In addition, the TLPB is an isothermal process, while the method according to the invention is a non-isothermal process, and has a much shorter process time. Moreover, in TLPB, a liquid phase is formed over the entire Al-Cu interface, while in the process according to the invention, an Al-Cu eutectic phase is needed only locally for initiating the process.

An additional advantage of the use of the invention for joining MMCs is that the compound formed by the solidified welding material has itself the composition and properties of a composite material, since it also consists of a matrix phase containing ceramic particles. In an advantageous embodiment, during the joining of Al MMC to Al, a compound is formed having a gradient in the amount of reinforcing phase. The composition gradient may overcome problems caused by residual stresses due to the different expansion coefficients of the composite material and the Al alloy. According to an advantageous embodiment of the invention, this gradient is effected by building up the powder mixture from different layers of powder mixtures, while each layer may differ in composition. If several layers are placed between the materials to be joined, it is sufficient if in one of the layers, the exothermic process is initiated at a eutectic temperature.

A non-limitative example of the method according to the invention will be described hereinbelow. However, it will be understood by anyone skilled in the art that the invention is also applicable to other types of material, for instance the joining of copper alloys and MMCs by the reaction:
(Cu + Al)+(Ti + 2B)=Cu Al - TiB₂, or materials such as steel and aluminum.

### Preparation of a reactive powder mixture:

Al, Cu, Ti and B powders are joined together in the (Al-Cu) + 40 vol.%(Ti+2B), that is, after complete reaction, 40% by volume of this composition has reacted to form TiB₂. The Al-Cu ratio in the matrix is chosen to be equal to the eutectic composition. After weighing off, this composition is mixed (in a Turbula type mixer). After this, the mixed powder is pressed cold (uniaxially) into a solid body, hereinafter referred to as 'pill'.

### Powders:

| Component: | Producer: | Tradename: |
|---|---|---|
| Al | Mettaloys Powders | Type 1; |
| | | average particle size ∼ 10 µm |
| Cu | Ecka Dorn GmbH | CH-UF 10; |
| | | average particle size ∼ 5 µm |
| Ti | Micron Metals Inc. | MP-020; |
| | | average particle size ∼ 23 µm |
| B | Ecka/Poudmet | Amorf; |
| | | average particle size < 1 µm |

### Joining process and setup:

In a setup suitable therefor, a pill is placed between the materials to be joined: bars of aluminum (diameter 10mm) or aluminum -20 vol.% (SiC particles). The pill and the bars are clamped in a half-open quartz tube between the end of the tube and a spring. Consequently, the materials to be joined are under a slight pressure. The quartz tube is now slid into a high-frequent (HF) coil, so that the pill is located at the center of the coil. By means of induction heating, the HF coil heats up the pill to the initiation temperature of the exothermic reaction. The HF coil is set so that heating up to 575°C takes place within 1 minute. The temperature is measured with a thermocouple placed in the coil adjacent the pill. Once the exothermic reaction has been initiated, which can be visually observed, the HF heating is ended to prevent melting of the materials to be joined due to the heat input of the HF coil. During the process, a liquid phase occurs for a brief period and the volume of the pill decreases. The spring pressure provides that a proper joint is formed all the same.

After the above description, various modifications will readily occur to skilled persons.

Such modifications are understood to fall within the framework of the invention.

## Claims

1. Method for reactively joining materials in solid form, such as intermetallic compounds and technical ceramics, wherein:
a) a mixed powder is provided in solid form between the materials to be joined;
b) at least the powder mixture is locally heated, causing exothermic reactions to take place in the powder mixture, whereby the heat is released at the contact surfaces of the materials to be joined, where it causes a local melting; and
c) subsequently cools down;
**characterized in that** at least one of the materials to be joined has a melting point coinciding with the melting point of the lowest-melting component in the powder mixture;
and that the exothermic process is initiated at a temperature before the melting point of one of the materials to be joined is reached, and that before the exothermic process is initiated, a component is added to the powder mixture, forming a liquid eutectic phase with the material having the lowest melting point of the materials to be joined, with the liquid eutectic phase acting as vehicle for the reactants in the powder mixture.

2. A method according to claim 1, characterized in that the powder mixture consists of metal powders.

3. A method according to claim 1 or 2, characterized in that the powder mixture consists of cold-pressed powders.

4. A method according to any one of claims 1-3, characterized in that the powders have been pressed into a pill or solid body.

5. A method according to any one of claims 1-4, characterized in that between the materials to be joined, different layers of powder mixture are located.

6. A method according to any one of claims 1-5, characterized in that a eutectic is formed only locally.

7. A method according to any one of claims 1-6, characterized in that the materials to be joined consist of Al and/or Al composite material (MMC).

8. A method according to any one of claims 1-7, characterized in that the component added to the powder mixture consists of Cu.

9. A method according to claim 8, characterized in that an Al-Cu eutectic having a melting point of 548°C is formed.

10. A method according to any one of claims 1-6, characterized in that the materials to be joined consist of copper alloys and MMCs.

11. A method according to any one of claims 1-6, characterized in that the materials to be joined consist of steel and aluminum.
